(19) Europäisches Patentamt
European Patent Office
Office européen des brevets

(11) **EP 3 630 508 B1**

(12) **EUROPÄISCHE PATENTSCHRIFT**

(45) Veröffentlichungstag und Bekanntmachung des Hinweises auf die Patenterteilung:
**20.01.2021  Patentblatt 2021/03**

(21) Anmeldenummer: **18722437.3**

(22) Anmeldetag: **26.04.2018**

(51) Int Cl.:
*B60G 17/015* *(2006.01)*        *B60G 17/018* *(2006.01)*
*B60G 21/055* *(2006.01)*        *F16H 57/12* *(2006.01)*

(86) Internationale Anmeldenummer:
**PCT/EP2018/060764**

(87) Internationale Veröffentlichungsnummer:
**WO 2018/219561 (06.12.2018 Gazette 2018/49)**

(54) **VERFAHREN ZUM ANSTEUERN EINES ELEKTROMECHANISCHEN WANKSTABILISATORS FÜR EIN FAHRZEUG, STEUERGERÄT UND WANKSTABILISATORSYSTEM**

METHOD FOR ACTUATING AN ELECTROMECHANICAL ROLL STABILISER FOR A VEHICLE, CONTROL DEVICE AND ROLL STABILISER SYSTEM

PROCÉDÉ POUR COMMANDER UN STABILISATEUR ANTIROULIS ÉLECTROMÉCANIQUE POUR UN VÉHICULE, APPAREIL DE COMMANDE ET SYSTÈME STABILISATEUR ANTIROULIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2017   DE 102017209143**

(43) Veröffentlichungstag der Anmeldung:
**08.04.2020   Patentblatt 2020/15**

(73) Patentinhaber: **ZF Friedrichshafen AG**
**88046 Friedrichshafen (DE)**

(72) Erfinder:
• **STEPHAN, Christian**
  **32479 Hille (DE)**
• **KRIMMEL, Horst**
  **88069 Tettnang (DE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
**DE-A1-102010 046 958      DE-A1-102014 223 019**
**DE-A1-102015 206 064      DE-T2-602005 002 279**

**Beschreibung**

Die vorliegende Erfindung bezieht sich auf ein Verfahren zum Ansteuern eines elektromechanischen Wankstabilisators für ein Fahrzeug, auf ein entsprechendes Steuergerät, auf ein entsprechendes Computerprogramm sowie auf ein Wankstabilisatorsystem. Ein gattungsgemäßes Ansteuerverfahren ist beispielsweise aus dem Dokument DE 60 2005 002279 T2 bekannt.

Zur Reduzierung von Impulsen beim Zahnflankenwechsel in einem Getriebe sind mechanische Lösungen wie beispielsweise federbeaufschlagte Zahnräder in rotatorischer oder axialer Richtung oder das Einbringen von Dämpfung oder Reibung an den Zahnrädern, zwischen den Zahnrädern und ihren axialen Anlaufflächen oder zwischen den Zahnrädern und ihrer Lagerung auf der Welle bekannt. Solche mechanischen Lösungen sind beispielsweise aus den Dokumenten DE 10 2015 206064 A1, DE 10 2010 046958 A1 und DE 10 2014 223019 A1 bekannt.

Vor diesem Hintergrund schafft die vorliegende Erfindung ein verbessertes Verfahren zum Ansteuern eines elektromechanischen Wankstabilisators für ein Fahrzeug, ein entsprechendes Steuergerät und ein verbessertes Wankstabilisatorsystem gemäß den Hauptansprüchen. Vorteilhafte Ausgestaltungen ergeben sich aus den Unteransprüchen und der nachfolgenden Beschreibung.

Es wird ein Verfahren zum Ansteuern eines elektromechanischen Wankstabilisators für ein Fahrzeug vorgestellt, wobei der elektromechanische Wankstabilisator einen ersten Stabilisatorteil, einen zweiten Stabilisatorteil, einen Elektromotor und ein Getriebe aufweist, wobei der erste Stabilisatorteil und der zweite Stabilisatorteil mittels des Elektromotors und des Getriebes relativ zueinander verdrehbar sind, wobei das Verfahren folgende Merkmale aufweist:

Auswerten eines Stabilisatormoments zwischen dem ersten Stabilisatorteil und dem zweiten Stabilisatorteil, um eine Drehbewegungsänderung des des Getriebes zu erkennen; und
Ändern eines durch den Elektromotor erzeugten Motormoments in Abhängigkeit von der Drehbewegungsänderung und einer Drehrichtung des Elektromotors, um ein Zahnspiel im Getriebe bei der Drehbewegungsänderung zu verringern.

Unter einem elektromechanischen Wankstabilisator kann ein Stabilisator aus zwei Stabilisatorteilen oder -hälften, etwa in Form eines Gehäuses und eines drehbar in dem Gehäuse gelagerten Stabs, und einem aktiven Element in Form eines Elektromotors mit nachgeschaltetem Getriebe verstanden werden, wobei der Elektromotor ausgebildet sein kann, um die beiden Stabilisatorteile aktiv gegeneinander zu verdrehen. Die Stabilisatorhälften sind auf der Fahrwerkseite mit diesem verbunden. Unter einem Getriebe kann ein Getriebe aus mehreren Getriebestufen, beispielsweise ein Planetengetriebe mit mehreren Planetenstufen, verstanden werden. Mittels eines derartigen Wankstabilisators kann zum einen eine hohe Wanksteifigkeit bei Kurvenfahrten, zum anderen eine Entkopplung einander gegenüberliegender Räder eines Fahrzeugs bei einseitiger oder wechselseitiger Anregung erreicht werden. Bei einseitiger Anregung z.B. aufgrund von Fahrbahnunebenheiten, kann so die Wankneigung sehr gut reduziert werden, um ein in diesem Fall unerwünschtes Kopierverhalten maximal zu unterbinden. Unter einem Fahrzeug kann hierbei ein zweispuriges Kraftfahrzeug wie etwa ein Personen- oder Lastkraftwagen verstanden werden.

Die beiden Stabilisatorteile können je mit einem Radaufhängungselement des Fahrzeugs, etwa einem Querlenker, gelenkig gekoppelt sein. Der Elektromotor und das Getriebe können beispielsweise in einem durch einen der beiden Stabilisatorteile gebildeten Gehäuse angeordnet sein, wobei das Gehäuse beispielsweise hohlzylinderförmig ausgestaltet sein kann.

Unter einem Stabilisatormoment kann ein zwischen dem ersten Stabilisatorteil und dem zweiten Stabilisatorteil wirkendes Drehmoment verstanden werden. Das Stabilisatormoment kann durch unterschiedliche Stellungen der mit dem Wankstabilisator gekoppelten Radaufhängungselemente des Fahrzeugs von außen aufgeprägt sein. Zusätzlich kann das Stabilisatormoment durch ein mittels des Getriebes übertragenen, vom Elektromotor erzeugten Motormoments veränderbar sein bzw. werden. Je nach äußerer Belastung des Wankstabilisators können der Elektromotor und das Getriebe gleich- oder gegensinnige Drehrichtungen aufweisen. Unter einer Drehbewegungsänderung kann eine Geschwindigkeitsänderung der Drehbewegung verstanden werden. Die Geschwindigkeitsänderung kann beispielsweise auch mit einer Richtungsumkehr der Drehbewegung einhergehen.

Der hier beschriebene Ansatz beruht auf der Erkenntnis, dass durch entsprechendes Ansteuern eines Elektromotors eines elektromechanischen Wankstabilisators störende Geräusche beim Drehrichtungswechsel im Getriebe des elektromechanischen Wankstabilisators vermindert werden können.

Bei jeder Art von Zahnradgetrieben ist konzeptbedingt immer ein Zahnflankenspiel vorhanden. Beim Drehrichtungswechsel kommt es daher in der Regel zu einem Zahnflankenschlagen, da bei einem Zahnflankenwechsel das Spiel zunächst aufgebraucht wird und dann beim Anschlagen eines Zahnes auf der jeweils gegenüberliegenden Seite ein Impuls erzeugt wird. Dieser Impuls kann als Geräusch oder gegebenenfalls auch als Schwingung oder Vibration wahrgenommen werden. Statt einer mechanischen Lösung ermöglicht es der hier vorgestellte Ansatz, durch den Elektromotor eine Drehmomentvorlast auf das im Wankstabilisator verwendete Getriebe, etwa ein Planetengetriebe, auf-

zubringen. Durch beispielsweise last- oder zeitabhängige Beeinflussung des Verhaltens beim Zahnflankenwechsel kann dieser gegebenenfalls vollständig vermieden werden. Durch derartiges Aufbringen der Drehmomentvorlast kann eine Akustikoptimierung des Getriebes realisiert werden.

Gemäß einer Ausführungsform kann im Schritt des Änderns das Motormoment erhöht werden, wenn die Drehbewegungsänderung eine Drehbewegung des Getriebes in der Drehrichtung des Elektromotors repräsentiert. Zusätzlich oder alternativ kann das Motormoment verringert werden, wenn die Drehbewegungsänderung eine Drehbewegung des Getriebes entgegen der Drehrichtung des Elektromotors repräsentiert. Unter einer Verringerung des Motormoments kann beispielsweise auch ein Vorzeichenwechsel des Motormoments und somit eine Umkehr einer Antriebsrichtung des Elektromotors verstanden werden. Dadurch kann eine besonders effektive Geräuschminderung gewährleistet werden.

Gemäß einer weiteren Ausführungsform kann im Schritt des Auswertens das Stabilisatormoment fortlaufend ausgewertet werden, um eine Stabilisatormomentänderung zu ermitteln, wobei die Drehbewegungsänderung anhand der Stabilisatormomentänderung erkannt wird. Dadurch wird eine dynamische Auswertung des Stabilisatormoments ermöglicht.

Es ist vorteilhaft, wenn im Schritt des Änderns das Motormoment geändert wird, um das Getriebe mit einem konstanten Zahnspielverringerungsmoment zum Verringern des Zahnspiels zu beaufschlagen. Durch diese Ausführungsform kann die Ansteuerung des Elektromotors vereinfacht werden.

Das Verfahren kann gemäß einer weiteren Ausführungsform einen Schritt des Einlesens eines Fahrzeugsensorsignals umfassen, wobei das Fahrzeugsensorsignal von einem Höhenstandssensor, einem Beschleunigungssensor oder einem Umfeldsensor des Fahrzeugs oder von einer Kombination aus zumindest zwei der genannten Sensoren erzeugt worden sein kann. Zusätzlich oder alternativ kann im Schritt des Einlesens ein von einem Rotorlagesensor zum Erfassen einer Rotorlage des Elektromotors erzeugten Motorsensorsignal, ein Stromwert, der einen durch den Elektromotor fließenden Strom repräsentiert, oder auch ein Messwert, der ein gemessenes Moment zwischen dem ersten Stabilisatorteil und dem zweiten Stabilisatorteil repräsentiert, eingelesen werden. Je nach Ausführungsform kann in einem Schritt des Ermittelns das Stabilisatormoment unter Verwendung des Fahrzeugsensorsignals, des Motorsensorsignals, des Stromwerts oder des Messwerts ermittelt werden. Dadurch kann das Stabilisatormoment zuverlässig und präzise berechnet werden.

Gemäß einer weiteren Ausführungsform kann im Schritt des Auswertens zum Erkennen der Drehbewegungsänderung eine dem Stabilisatormoment zugeordnete Wirkrichtung oder, zusätzlich oder alternativ, eine dem Stabilisatormoment zugeordnete Wirkrichtungsänderung ermittelt werden. Dadurch wird eine zuverlässige und effiziente Erkennung der Drehbewegungsänderung ermöglicht.

Von Vorteil ist hierbei, wenn im Schritt des Auswertens die Wirkrichtung oder, zusätzlich oder alternativ, die Wirkrichtungsänderung an zumindest zwei verschiedenen Stellen des elektromechanischen Wankstabilisators ermittelt wird. Dadurch kann die Genauigkeit der Erkennung der Drehbewegungsänderung erhöht werden. Insbesondere ist es vorteilhaft, wenn die Wirkrichtung oder, zusätzlich oder alternativ, die Wirkrichtungsänderung an zumindest einer Getriebestufe des Getriebes oder, zusätzlich oder alternativ, am Elektromotor ermittelt wird, insbesondere beispielsweise an Lagerstellen der Getriebestufe oder der Rotorwelle des Elektromotors. Auch durch diese Ausführungsform kann eine besonders genaue Erkennung der Drehbewegungsänderung gewährleistet werden.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung des Fahrzeugs. Hierzu kann das Steuergerät beispielsweise auf Sensorsignale wie Beschleunigungs-, Druck-, Lenkwinkel- oder Umfeldsensorsignale zugreifen. Die Ansteuerung erfolgt über Aktoren wie Brems- oder Lenkaktoren oder ein Motorsteuergerät des Fahrzeugs.

Der hier vorgestellte Ansatz schafft zudem ein Wankstabilisatorsystem mit folgenden Merkmalen:

einem elektromechanischen Wankstabilisator mit einem ersten Stabilisatorteil, einem zweiten Stabilisatorteil, einem Elektromotor und einem Getriebe, wobei der erste Stabilisatorteil und der zweite Stabilisatorteil mittels des Elektromotors und des Getriebes relativ zueinander verdrehbar sind; und

einem Steuergerät gemäß einer vorstehenden Ausführungsform.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Die Erfindung wird anhand der beigefügten Zeichnungen beispielhaft näher erläutert.

Es zeigen:

Figur 1    eine schematische Darstellung eines Abschnitts eines Fahrzeugs mit einem Wankstabilisatorsystem gemäß einem Ausführungsbeispiel;

Figur 2    eine schematische Darstellung eines elektromechanischen Wankstabilisators gemäß einem Ausführungsbeispiel;

Figur 3    eine schematische Darstellung eines elektromechanischen Wankstabilisators gemäß einem Ausführungsbeispiel;

Figur 4    eine schematische Darstellung eines Steuergeräts gemäß einem Ausführungsbeispiel; und

Figur 5    ein Ablaufdiagramm eines Verfahrens gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

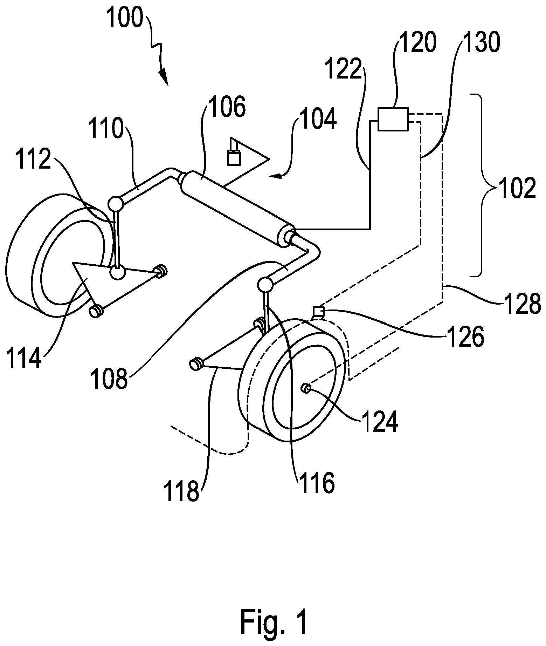

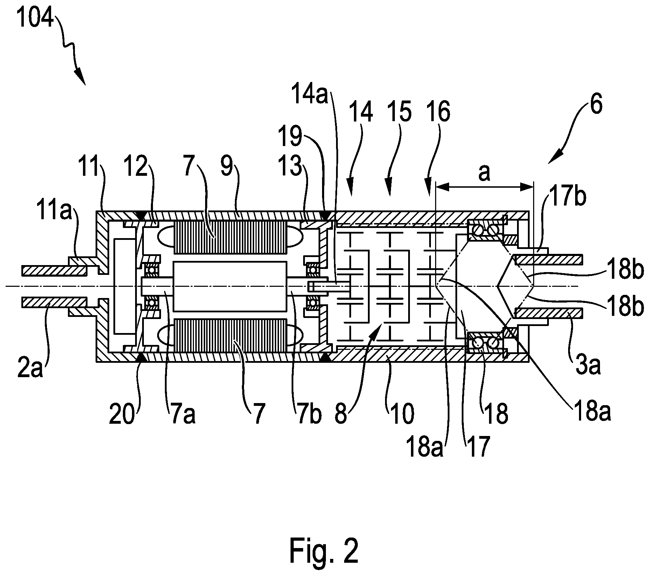

Figur 1 zeigt eine schematische Darstellung eines Abschnitts eines Fahrzeugs 100 mit einem Wankstabilisatorsystem 102 gemäß einem Ausführungsbeispiel. Das Wankstabilisatorsystem 102 umfasst einen elektromechanischen Wankstabilisator 104 mit einem ersten Stabilisatorteil 106 und einem zweiten Stabilisatorteil 108. Die beiden Stabilisatorteile 106, 108 sind mittels eines Aktuators, der einen Elektromotor und ein mit dem Elektromotor gekoppeltes Getriebe umfasst, relativ zueinander verdrehbar. Gemäß dem in Figur 1 gezeigten Ausführungsbeispiel ist der erste Stabilisatorteil 106 als ein hohlzylinderförmiges Gehäuse zum Aufnehmen des Aktuators ausgestaltet, weshalb der Aktuator in Figur 1 nicht zu sehen ist. An dem Gehäuse ist ein hier beispielhaft rechtwinklig ausgeformter Stabilisatorstab 110, auch Stabilisatorarm genannt, drehfest angebracht. Der Stabilisatorstab 110 ist wiederum über einen ersten Verbindungsstab 112, z.B. als Pendelstütze ausgeführt, gelenkig mit einem ersten Radaufhängungselement 114 des Fahrzeugs 100 verbunden, beispielsweise einem Querlenker. Der zweite Stabilisatorteil 108 ist ebenfalls als ein rechtwinklig ausgeformter Stabilisatorstab ausgeformt, der jedoch im Unterschied zum Stabilisatorstab 110 drehbar im ersten Stabilisatorteil 106 gelagert ist, wie dies nachfolgend anhand von Figur 2 näher beschrieben ist. Analog zum Stabilisatorstab 110 ist der zweite Stabilisatorteil 108 über einen zweiten Verbindungsstab 116 gelenkig mit einem dem ersten Radaufhängungselement 114 gegenüberliegenden zweiten Radaufhängungselement 118 in Form eines Querlenkers verbunden. Je nach Belastung des elektromechanischen Wankstabilisators 104 durch eine jeweilige Auslenkung der beiden Radaufhängungselemente 114, 118 wirkt zwischen den beiden Stabilisatorteilen 106, 108 ein Stabilisatormoment. Das Stabilisatormoment ist mittels des Aktuators durch Verdrehen des ersten Stabilisatorteils 106 relativ zum zweiten Stabilisatorteil 108 in geeigneter Weise steuer- oder regelbar, um Wankbewegungen des Fahrzeugs 100, etwa bei Kurvenfahrten oder bei Fahrten auf unebener Fahrbahn, zu minimieren.

Des Weiteren umfasst das Wankstabilisatorsystem 102 ein Steuergerät 120, das ausgebildet ist, um das zwischen den beiden Stabilisatorteilen 106, 108 wirkende Stabilisatormoment auszuwerten und abhängig von der Auswertung eine Änderung einer Drehbewegung des Getriebes zu erkennen. Bei der Erkennung handelt es sich beispielsweise um eine mittels geeigneter Berechnungen durchgeführte Schätzung einer voraussichtlichen Drehbewegungsänderung des Getriebes. Je nach erkannter Drehbewegungsänderung erzeugt das Steuergerät 120 ein Ansteuersignal 122 zum Ansteuern des Elektromotors, das dazu dient, ein vom Elektromotor erzeugtes, auf das Getriebe übertragenes Motormoment abhängig von der Drehbewegungsänderung und einer aktuellen Drehrichtung des Elektromotors derart zu ändern, dass das Zahnspiel im Getriebe bei der Drehbewegungsänderung auf ein Minimum reduziert wird. Beispielsweise ist der Elektromotor ausgebildet, um das Motormoment so in das Getriebe aufzuprägen, dass die Zahnflanken definiert angelegt werden und somit ein Zahnflankenschlagen vermieden wird. Dadurch können Getriebegeräusche, wie sie etwa bei einem abrupten Zahnflankenwechsel durch Aufeinanderschlagen der Zahnflanken entstehen, weitgehend eliminiert werden.

Insbesondere ist das Steuergerät 120 beispielsweise ausgebildet, um das Motormoment zu erhöhen, wenn die Drehbewegungsänderung eine Drehbewegung des Getriebes in der Drehrichtung des Elektromotors repräsentiert, oder auch das Motormoment zu verringern bzw. umzukehren, wenn die Drehbewegungsänderung eine Drehbewegung des Getriebes entgegen der Drehrichtung des Elektromotors repräsentiert.

Gemäß diesem Ausführungsbeispiel ist das Steuergerät 120 zur Ermittlung des Stabilisatormoments mit zumindest einem im Fahrzeug 100 befindlichen Sensor zum Erfassen verschiedener Fahrzeugparameter gekoppelt, hier mit einem Höhenstandssensor 124 und einem Beschleunigungssensor 126, wobei der Höhenstandssensor 124 ausgebildet ist, um ein einen Höhenstand des Fahrzeugs 100 repräsentierendes erstes Fahrzeugsensorsignal 128 an das Steuergerät 120 zu senden, und der Beschleunigungssensor 126 ausgebildet ist, um ein eine Beschleunigung des Fahrzeugs 100 repräsentierendes zweites Fahrzeugsensorsignal 130 an das Steuergerät 120 zu senden. Dementsprechend ist das Steuergerät 120 ausgebildet, um das Stabilisatormoment unter Verwendung der beiden Fahrzeugsensorsignale 128, 130 zu ermitteln. Zusätzlich oder alternativ ist das Steuergerät 120 zur Ermittlung des Stabilisatormoments mit einem Umfeldsensor zum Erfassen eines Umfelds des Fahrzeugs oder einem im Wankstabilisator 104 angeordneten Rotorlagesensor zum Erfassen einer Rotorlage des Elektromotors gekoppelt. Die Ermittlung des Stabilisatormoments erfolgt je nach Ausführungsbeispiel zusätzlich oder alternativ basierend auf Messwerten bezüglich eines gemessenen Moments zwischen den beiden Stabilisatorteilen 106, 108 sowie basierend auf Stromwerten bezüglich eines durch den Elektromotor fließenden elektrischen Motorstroms.

Gemäß einem Ausführungsbeispiel ist das Steuergerät 120 ausgebildet, um das Stabilisatormoment dynamisch, etwa bei Schwellenfahrt oder bei Fahrt auf schlechten Wegen, auf Basis der genannten Sensor- oder Messwerte zu berechnen. Der zur Steuerung des Motormoments verwendete Wert des Stabilisatormoments ist in diesem Fall also nicht konstant.

Insbesondere wird das Stabilisatormoment hierbei dynamisch über eine Schätzung der in einer oder mehreren Getriebestufen, beispielsweise Planetenstufen, anliegenden Zahnflankenkräfte berechnet. Das Stabilisatormoment wird beispielsweise unter Verwendung von Signalen von Höhenstandssensoren 124 oder anderer im Fahrzeug 100 verfügbarer Signale, beispielsweise von Beschleunigungssensoren 126 oder aus Kamerabildauswertungen (Precam), in jeder Getriebestufe anhand der Zahnflankenkräfte berechnet, geschätzt oder prognostiziert. Ergibt sich beispielsweise durch äußere Anregung die Prognose, dass sich die Drehrichtung, d. h. das Vorzeichen der Zahnflankenkraft, ändert, so steuert das Steuergerät 120 diesem Nulldurchgang durch Änderung des Motormoments in geeignetem Maß entgegen.

Um ein akustisch nachteiliges Zahnflankenschlagen zu vermeiden, wird beispielsweise das Aktuatormoment, d. h. das am Aktuator wirkende Drehmoment, vorangehend auch Stabilisatormoment genannt, berechnet oder gemessen. Wird dabei ein Vorzeichenwechsel des Aktuatormoments identifiziert oder prädiziert, so reagiert die im Steuergerät 120 implementierte Motorregelung mittels einer entsprechenden Motormomenterhöhung oder -reduzierung, um den akustischen Eintrag des Zahnflankenrichtungswechsels zu reduzieren. Das Aktuatormoment ist beispielsweise, wie bereits erwähnt, unter Nutzung von Höhenstandsensorsignalen, Beschleunigungssignalen, Motorströmen oder eines gemessenen Stabilisatormoments berechenbar.

Gemäß einem Ausführungsbeispiel führt das Steuergerät 120 eine Berechnung einer Momentenwirkrichtung an verschiedenen Stellen im Aktuator, insbesondere am Elektromotor und an verschiedenen Getriebestufen, unter Berücksichtigung der mechanischen Trägheit durch, wobei gilt:

$$\theta_{(mot+get)}\dot{\omega}_{mot} = M_{mot}\left(I_{Phase}\right) + i_{get}M_{links-rechts} + \omega_{mot}D_{(mot+get)}$$

$$M_{links-rechts} = Kennfeld\left(h_{links} - h_{rechts}, \varphi_{Motor}\right)$$

Ferner erfolgt eine Berechnung oder Prädiktion einer Änderung der Momentenwirkrichtung durch das Steuergerät 120.

Die Motormomentänderung erfolgt beispielsweise situationsabhängig, um an verschiedenen Lagerstellen, etwa an Wellen oder am Gehäuse, und Kontaktstellen, etwa zwischen den Zahnrädern, die Höhe der auftretenden Drehmomentspitzen zu reduzieren.

Zur Illustration der Wirkweise des Wankstabilisatorsystems 102 sei folgendes Beispiel genannt. Wenn Elektromotor und Getriebe in eine gemeinsame Richtung drehen und eine Drehrichtungsumkehr auf Basis der Sensorsignale 128, 130 und der oben genannten Berechnung prädiziert wird, dann wird beispielsweise, sofern die Drehrichtungsumkehr vermieden werden kann, das Motormoment in Motordrehrichtung erhöht, um ein Flankenumschlagen zu verhindern. Kann im Gegenzug die Drehrichtungsumkehr nicht vermieden werden, so wird der Elektromotor durch entsprechende Ansteuerung mittels des Steuergeräts 120 vorausschauend abgebremst, sodass die Momentspitze minimiert wird.

Gemäß einem Ausführungsbeispiel ist das Steuergerät 120 ausgebildet, um den Elektromotor so anzusteuern, dass ein konstantes oder fahrsituationsabhängig konstantes Motormoment aufgeprägt wird. Eine derartige Ansteuerung ist mit teilweise stark vereinfachten Berechnungen realisierbar.

Durch das aktive Verdrehen der beiden Stabilisatorteile 106, 108 zueinander kann das Wanken des Fahrzeugs 100 bei unterschiedlichen Fahrbahnunebenheiten und in Kurvenfahrten verringert werden. Die Radaufstandslasten zwischen kurveninnerem und kurvenäußerem Rad sind damit variabel verteilbar.

Figur 2 zeigt eine schematische Darstellung eines Querschnitts durch einen elektromechanischen Wankstabilisator 104, etwa einen vorangehend anhand von Figur 1 beschriebenen Wankstabilisator.

Der Wankstabilisator 104 umfasst einen Schwenkmotor 6, wobei die Enden 2a, 3a zweier Stabilisatorarme, vorangehend auch erster und zweiter Stabilisatorstab genannt, jeweils stirnseitig mit dem Schwenkmotor 6 verbunden sind. Der Schwenkmotor 6 umfasst einen Elektromotor 7, dem ein dreistufiges Planetengetriebe 8 nachgeschaltet ist. Der Elektromotor 7 ist in einem ersten Teilgehäuse 9 angeordnet, während das Planetengetriebe 8 in einem zweiten Teilgehäuse 10 angeordnet ist. Das erste Teilgehäuse 9 schließt auf seiner dem Stabilisatorende 2a zugewandten Stirnseite mit einem Deckel 11 ab. Der Deckel 11 weist einen Stutzen 11a auf. Das Stabilisatorende 2a ist beispielsweise über eine Schweißverbindung stoffschlüssig mit dem Stutzen 11a verbunden. An beiden Stirnseiten des Elektromotors 7 sind Lagerschilde 12, 13 innerhalb des ersten Teilgehäuses 9 angeordnet, in denen die Enden 7a, 7b der Motorwelle gelagert sind. Das erste Teilgehäuse 9 bildet mit dem Elektromotor 7 und den Lagerschilden 12, 13 ein erstes Modul, das beispielsweise vor der Endmontage als selbstständige Baueinheit vorgefertigt wird.

Das zweite Teilgehäuse 10 und das darin aufgenommene Planetengetriebe 8 bilden ein zweites Modul, das ebenfalls als selbstständige Baueinheit vorgefertigt wird. Das Planetengetriebe 8 weist drei Planetenstufen, d. h. drei Radsätze 14, 15, 16, auf, die jeweils ein Sonnenrad, Planetenräder, einen Planetenträger oder Steg sowie ein gemeinsames Hohlrad aufweisen und jeweils miteinander gekoppelt sind. Das Hohlrad, in das jeweils die Planetenräder der einzelnen Radsätze 14, 15, 16 eingreifen, ist in das zweite Teilgehäuse 10 integriert, d. h., die Innenverzahnung ist in den Innenumfang des Teilgehäuses 10 eingearbeitet.

Der dritte oder abtriebsseitige Radsatz 16 weist einen Planententräger 17 auf, der massiv ausgebildet ist und auf seinem Außenumfang einen Lagersitz 17a sowie stirnseitig einen Stutzen 17b aufweist. Über den Stutzen 17b sind der Planetenträger 17 und damit der gesamte Schwenkmotor 6 mit dem Stabilisatorende 3a stoffschlüssig, vorzugsweise über eine Schweißnaht, verbunden. Auf dem Lagersitz 17a ist ein zweireihiges Schrägkugellager 18 angeordnet, das sich mit seinem Außenring gegenüber dem zweiten Teilgehäuse 10 abstützt und dort axial fixiert ist. Der Innenring des Schrägkugellagers 18 ist axial auf dem Planetenträger 17 fixiert. Aufgrund der bekannten Ausbildung des Schrägkugellagers 18, das vorzugsweise als Normteil gemäß DIN 628 ausgebildet ist, ergeben sich schräg verlaufende Drucklinien 18a, 18b, die eine verbreiterte Abstützbasis a bilden. Der eine Raute bildende Verlauf der Drucklinien 18a, 18b wird auch als O-Anordnung bezeichnet. Das zweireihige Schrägkugellager 18 ist zur Aufnahme von Radial- und Axialkräften sowie insbesondere zur Aufnahme von Kippmomenten geeignet. Ein solches Kipp- oder Biegemoment wird über das Stabilisatorende 3a in den Planetenträger 17 eingeleitet. Dieses Biegemoment wird aufgrund der verbreiterten Abstützbasis a vom zweiten Teilgehäuse 10 aufgenommen. Damit wird einer Verkippung der Rotationsachse des Planetenträgers 17 und damit einer Verschränkung der Planetenräder des Radsatzes 16 vorgebeugt.

Die Teilgehäuse 9, 10 werden bei der Endmontage des Schwenkmotors 6 beispielsweise durch eine mittlere Umfangsschweißnaht 19 miteinander verbunden, wobei gleichzeitig das Lagerschild 13 zwecks axialer Fixierung mitverschweißt werden kann. Bei der Endmontage dient der aus dem Teilgehäuse 9 vorstehende Teil des Lagerschildes 13 als Zentrierhilfe für das zu fügende zweite Teilgehäuse 10. Mit dem äußeren Ende des ersten Teilgehäuses 9 wird der Deckel 11 gefügt, wobei das überstehende Ende des Lagerschildes 12 ebenfalls als Zentrierhilfe dient. Der Deckel 11 wird mit dem ersten Teilgehäuse 9 etwa durch eine weitere Umfangsschweißnaht 20 stoffschlüssig gefügt. Das Fügen von Elektromotor 7 und Planetengetriebe 8 beim Zusammenbau der beiden Teilgehäuse 9, 10 erfolgt über eine Steckverbindung zwischen dem Wellenende 7b und der Sonnenradwelle 14a des ersten Radsatzes 14.

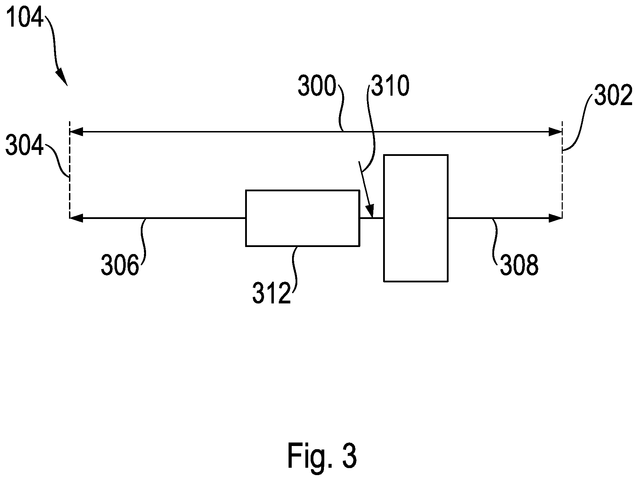

Figur 3 zeigt eine schematische Darstellung eines elektromechanischen Wankstabilisators 104 gemäß einem Ausführungsbeispiel, etwa eines vorangehend anhand der Figuren 1 und 2 beschriebenen Wankstabilisators. Ein Doppelpfeil 300 symbolisiert das Stabilisatordrehmoment zwischen einer Gehäuseseite 302, die durch den ersten Stabilisatorteil gebildet ist, und einer Lagerseite 304, die durch den zweiten Stabilisatorteil gebildet ist. Der Abtrieb auf der Lagerseite 304 ist durch einen Pfeil 306, der Abtrieb auf der Gehäuseseite 302 durch einen Pfeil 308 gekennzeichnet. Ein Rotorlagesensor ist durch einen weiteren Pfeil 310 angedeutet. Ein Kasten 312 repräsentiert Rotor, Getriebe und Abtrieb.

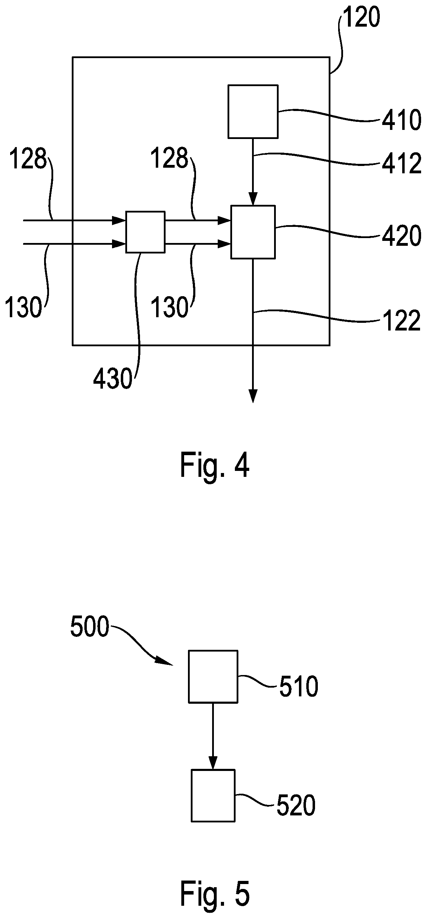

Figur 4 zeigt eine schematische Darstellung eines Steuergeräts 120 gemäß einem Ausführungsbeispiel, etwa eines vorangehend anhand der Figuren 1 und 2 beschriebenen Steuergeräts. Das Steuergerät 120 umfasst eine Auswerteeinheit 410 zum Auswerten des Stabilisatormoments zwischen dem ersten Stabilisatorteil und dem zweiten Stabilisatorteil, um eine Drehbewegungsänderung des Getriebes zu erkennen. Als Ergebnis der Auswertung gibt die Auswerteeinheit 410 ein die erkannte Drehbewegungsänderung repräsentierende Auswerteinformation 412 an eine Änderungseinheit 420 aus, die ausgebildet ist, um das Ansteuersignal 122 zum Ändern des Motormoments unter Verwendung der Auswerteinformation 412 sowie abhängig von der aktuellen Drehrichtung des Elektromotors zu erzeugen.

Eine optionale Einleseeinheit 430 dient beispielsweise zum Einlesen des ersten Fahrzeugsensorsignals 128 und des zweiten Fahrzeugsensorsignals 130 und zu deren Weiterleitung an die Auswerteeinheit 420, die die Fahrzeugsensorsignale 128, 130 zur Berechnung des Stabilisatormoments und somit zur Erzeugung des Ansteuersignals 122 verwendet.

Figur 5 zeigt ein Ablaufdiagramm eines Verfahrens 500 gemäß einem Ausführungsbeispiel. Das Verfahren 500 kann beispielsweise unter Verwendung eines vorangehend anhand der Figuren 1 bis 4 beschriebenen Steuergeräts durchgeführt werden. Dabei wird in einem Schritt 510 das Stabilisatormoment ausgewertet, um die Drehbewegungsänderung des Getriebes zu erkennen, und in einem Schritt 520 das Motormoment entsprechend der Drehbewegungsänderung und der Drehrichtung des Elektromotors geändert, um das Zahnspiel im Getriebe bei der Drehbewegungsänderung zu verringern.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

**Bezugszeichen**

| | |
|---|---|
| a | Abstützbasis |
| 2a | erstes Stabilisatorende |
| 3a | zweites Stabilisatorende |
| 6 | Schwenkmotor |
| 7 | Elektromotor |
| 7a | erstes Wellenende |
| 7b | zweites Wellenende |
| 8 | Planetengetriebe |
| 9 | erstes Teilgehäuse |
| 10 | zweites Teilgehäuse |
| 11 | Deckel |
| 11a | Stutzen |
| 12 | erstes Lagerschild |
| 13 | zweites Lagerschild |
| 14 | erster Radsatz |
| 14a | Sonnenradwelle |
| 15 | zweiter Radsatz |
| 16 | dritter Radsatz |
| 17 | Planententräger |
| 17a | Lagersitz |
| 17b | Stutzen |
| 18 | Schrägkugellager |
| 18a | erste Drucklinie |
| 18b | zweite Drucklinie |
| 19 | Umfangsschweißnaht |
| 20 | weitere Umfangsschweißnaht |
| 100 | Fahrzeug |
| 102 | Wankstabilisatorsystem |
| 104 | elektromechanischer Wankstabilisator |
| 106 | erster Stabilisatorteil |
| 108 | zweiter Stabilisatorteil |
| 110 | Stabilisatorstab |
| 112 | erster Verbindungsstab |

114    erstes Radaufhängungselement
116    zweiter Verbindungsstab
118    zweites Radaufhängungselement
120    Steuergerät
122    Ansteuersignal
124    Höhenstandssensor
126    Beschleunigungssensor
128    erstes Fahrzeugsensorsignal
130    zweites Fahrzeugsensorsignal
300    Stabilisatormoment
302    Gehäuseseite
304    Lagerseite
306    Abtrieb an der Lagerseite
308    Abtrieb an der Gehäuseseite
310    Rotorlagesensor
312    Rotor/Getriebe/Abtrieb
410    Auswerteeinheit
412    Auswerteinformation
420    Änderungseinheit
430    Einleseeinheit
500    Verfahren zum Ansteuern eines elektromechanischen Wankstabilisators
510    Schritt des Auswertens
520    Schritt des Änderns

**Patentansprüche**

1. Verfahren (500) zum Ansteuern eines elektromechanischen Wankstabilisators (104) für ein Fahrzeug (100), wobei der elektromechanische Wankstabilisator (104) einen ersten Stabilisatorteil (106), einen zweiten Stabilisatorteil (108), einen Elektromotor (7) und ein Getriebe (8) aufweist, wobei der erste Stabilisatorteil (106) und der zweite Stabilisatorteil (108) mittels des Elektromotors (7) und des Getriebes (8) relativ zueinander verdrehbar sind, wobei das Verfahren (500) folgende Merkmale aufweist:

   Auswerten (510) eines Stabilisatormoments (300) zwischen dem ersten Stabilisatorteil (106) und dem zweiten Stabilisatorteil (108), um eine Drehbewegungsänderung des Getriebes (8) zu erkennen; und
   Ändern (520) eines durch den Elektromotor (7) erzeugten Motormoments in Abhängigkeit von der Drehbewegungsänderung und einer Drehrichtung des Elektromotors (7), um ein Zahnspiel im Getriebe (8) bei der Drehbewegungsänderung zu verringern.

2. Verfahren (500) gemäß Anspruch 1, bei dem im Schritt des Änderns (520) das Motormoment erhöht wird, wenn die Drehbewegungsänderung eine Drehbewegung des Getriebes (8) in der Drehrichtung des Elektromotors (7) repräsentiert, und/oder das Motormoment verringert wird, wenn die Drehbewegungsänderung eine Drehbewegung des Getriebes (8) entgegen der Drehrichtung des Elektromotors (7) repräsentiert.

3. Verfahren (500) gemäß einem der vorangegangenen Ansprüche, bei dem im Schritt des Auswertens (510) das Stabilisatormoment (300) fortlaufend ausgewertet wird, um eine Stabilisatormomentänderung zu ermitteln, wobei die Drehbewegungsänderung anhand der Stabilisatormomentänderung erkannt wird.

4. Verfahren (500) gemäß einem der vorangegangenen Ansprüche, bei dem im Schritt des Änderns (520) das Motormoment geändert wird, um das Getriebe (8) mit einem konstanten Zahnspielverringerungsmoment zum Verringern des Zahnspiels zu beaufschlagen.

5. Verfahren (500) gemäß einem der vorangegangenen Ansprüche, mit einem Schritt des Einlesens eines von einem Höhenstandssensor (124) und/oder Beschleunigungssensor (126) und/oder Umfeldsensor des Fahrzeugs (100) erzeugten Fahrzeugsensorsignals (128, 130) und/oder eines von einem Rotorlagesensor zum Erfassen einer Rotorlage des Elektromotors (7) erzeugten Motorsensorsignals und/oder eines Stromwerts, der einen durch den Elektromotor (7) fließenden Strom repräsentiert, und/oder eines Messwerts, der ein gemessenes Moment zwischen dem ersten Stabilisatorteil (106) und dem zweiten Stabilisatorteil (108) repräsentiert, wobei in einem Schritt des Ermittelns des Stabilisatormoments (300) unter Verwendung des Fahrzeugsensorsignals (128, 130) und/oder des Motorsensorsignals und/oder des Stromwerts und/oder des Messwerts ermittelt wird.

6. Verfahren (500) gemäß einem der vorangegangenen Ansprüche, bei dem im Schritt des Auswertens (510) zum Erkennen der Drehbewegungsänderung eine dem Stabilisatormoment (300) zugeordnete Wirkrichtung und/oder eine dem Stabilisatormoment (300) zugeordnete Wirkrichtungsänderung ermittelt wird.

7. Verfahren (500) gemäß Anspruch 6, bei dem im Schritt des Auswertens (510) die Wirkrichtung und/oder die Wirkrichtungsänderung an zumindest zwei verschiedenen Stellen des elektromechanischen Wankstabilisators (104) ermittelt wird.

8. Verfahren (500) gemäß Anspruch 6 oder 7, bei dem die Wirkrichtung und/oder die Wirkrichtungsänderung an zumindest einer Getriebestufe (14, 15, 16) des Getriebes (8) und/oder am Elektromotor (7) ermittelt wird.

9. Steuergerät (120) mit Einheiten (410, 420, 430), die ausgebildet sind, um das Verfahren (500) gemäß einem der Ansprüche 1 bis 8 auszuführen und/oder anzusteuern.

10. Wankstabilisatorsystem (102) mit folgenden Merkmalen:

   einem elektromechanischen Wankstabilisator (104) mit einem ersten Stabilisatorteil (106), einem zweiten Stabilisatorteil (108), einem Elektromotor (7) und einem Getriebe (8), wobei der erste Stabilisatorteil (106) und der zweite Stabilisatorteil (108) mittels des Elektromotors (7) und des Getriebes (8) relativ zueinander verdrehbar sind; und
   einem Steuergerät (120) gemäß Anspruch 9.

11. Computerprogramm, das ausgebildet ist, um das Verfahren (500) gemäß einem der Ansprüche 1 bis 8 auszuführen und/oder anzusteuern.

12. Maschinenlesbares Speichermedium, auf dem das Computerprogramm nach Anspruch 11 gespeichert ist.


**Claims**

1. Method (500) for actuating an electromechanical roll stabilizer (104) for a vehicle (100), wherein the electromechanical roll stabilizer (104) has a first stabilizer part (106), a second stabilizer part (108), an electric motor (7) and a transmission (8), wherein the first stabilizer part (106) and the second stabilizer part (108) can be rotated relative to one another by means of the electric motor (7) and the transmission (8), wherein the method (500) comprises the following features:

   evaluating (510) a stabilizer moment (300) between the first stabilizer part (106) and the second stabilizer part (108) in order to identify a change in the rotational movement of the transmission (8); and
   changing (520) a motor torque, which is generated by the electric motor (7), depending on the change in the rotational movement and a rotation direction of the electric motor (7) in order to reduce tooth play in the transmission (8) in the event of the change in the rotational movement.

2. Method (500) according to Claim 1, in which, in the changing step (520), the motor moment is increased when the change in the rotational movement represents a rotational movement of the transmission (8) in the rotation direction of the electric motor (7), and/or the motor moment is reduced when the change in the rotational movement represents a rotational movement of the transmission (8) counter to the rotation direction of the electric motor (7).

3. Method (500) according to either of the preceding claims, in which, in the evaluation step (510), the stabilizer moment (300) is continuously evaluated in order to determine a change in the stabilizer moment, wherein the change in the rotational movement is identified on the basis of the change in the stabilizer moment.

4. Method (500) according to one of the preceding claims, in which, in the changing step (520), the motor moment is changed in order to apply a constant tooth play-reducing moment to the transmission (8) in order to reduce the tooth play.

5. Method (500) according to one of the preceding claims, comprising a step of reading a vehicle sensor signal (128, 130) which is generated by a height sensor (124) and/or acceleration sensor (126) and/or environment sensor of the vehicle (100) and/or a motor sensor signal which is generated by a rotor position sensor for detecting a rotor position of the electric motor (7) and/or a current value which represents a current flowing through the electric motor (7), and/or a measurement value which represents a measured moment between the first stabilizer part (106) and the second stabilizer part (108), wherein, in the step for determining the stabilizer moment (300), the said stabilizer moment is determined using the vehicle sensor signal (128, 130) and/or the motor sensor signal and/or the current value and/or the measurement value.

6. Method (500) according to one of the preceding claims, in which, in the evaluation step (510), an action direction which is associated with the stabilizer moment (300) and/or a change in the action direction which is associated with the stabilizer moment (300) are/is determined for identifying the change in the rotational movement.

7. Method (500) according to Claim 6, in which, in the evaluation step (510), the action direction and/or the change in the action direction are/is determined at at least two different points of the electromechanical roll stabilizer (104).

8. Method (500) according to Claim 6 or 7, in which the action direction and/or the change in the action direction is determined at at least one transmission stage (14, 15, 16) of the transmission (8) and/or at the electric motor (7).

9. Controller (120) comprising units (410, 420, 430) which are designed in order to execute and/or to actuate the method (500) according to one of Claims 1 to 8.

10. Roll stabilizer system (102) comprising the following features:

   an electromechanical roll stabilizer (104) comprising a first stabilizer part (106), a second stabilizer part (108), an electric motor (7) and a transmission (8), wherein the first stabilizer part (106) and the second stabilizer part (108) can be rotated relative to one another by means of the electric motor (7) and the transmission (8); and a controller (120) according to Claim 9.

11. Computer program which is designed in order to execute and/or to actuate the method (500) according to one of Claims 1 to 8.

12. Machine-readable storage medium in which the computer program according to Claim 11 is stored.

**Revendications**

1. Procédé (500) de commande d'un stabilisateur de roulis (104) électromécanique pour un véhicule (100), le stabilisateur de roulis (104) électromécanique possédant une première partie de stabilisateur (106), une deuxième partie de stabilisateur (108), un moteur électrique (7) et un engrenage (8), la première partie de stabilisateur (106) et la deuxième partie de stabilisateur (108) pouvant effectuer une rotation l'une par rapport à l'autre au moyen du moteur électrique (7) et de l'engrenage (8), le procédé (500) possédant les caractéristiques suivantes :

   évaluation (510) d'un moment de stabilisateur (300) entre la première partie de stabilisateur (106) et la deuxième partie de stabilisateur (108) afin de reconnaître un changement de mouvement de rotation de l'engrenage (8) et modification (520) d'un moment de moteur généré par le moteur électrique (7) en fonction du changement de mouvement de rotation et d'un sens de rotation du moteur électrique (7) afin de réduire un jeu d'entredent dans l'engrenage (8) lors du changement de mouvement de rotation.

2. Procédé (500) selon la revendication 1, avec lequel, à l'étape de modification (520), le moment de moteur est augmenté lorsque le changement de mouvement de rotation représente un mouvement de rotation de l'engrenage (8) dans le sens de rotation du moteur électrique (7), et/ou le moment de moteur est réduit lorsque le changement de mouvement de rotation représente un mouvement de rotation de l'engrenage (8) à l'opposé du sens de rotation du moteur électrique (7).

3. Procédé (500) selon l'une des revendications précédentes, avec lequel, à l'étape d'évaluation (510), le moment de stabilisateur (300) est continuellement évalué afin de déterminer un changement de moment de stabilisateur, le changement de mouvement de rotation étant reconnu à l'aide du changement de moment de stabilisateur.

**4.** Procédé (500) selon l'une des revendications précédentes, avec lequel, à l'étape de modification (520), le moment de moteur est modifié en vue de solliciter l'engrenage (8) avec un moment de réduction de jeu d'entredent constant afin de réduire le jeu d'entredent.

**5.** Procédé (500) selon l'une des revendications précédentes, comprenant une étape de lecture d'un signal de capteur de véhicule (128, 130), généré par un capteur de hauteur (124) et/ou un capteur d'accélération (126) et/ou un capteur d'environnement du véhicule (100), et/ou d'un signal de capteur de moteur, généré par un capteur de position de rotor destiné à détecter une position de rotor du moteur électrique (7), et/ou d'une valeur de courant, qui représente un courant qui circule à travers le moteur électrique (7), et/ou d'une valeur mesurée, qui représente un moment mesuré entre la première partie de stabilisateur (106) et la deuxième partie de stabilisateur (108), le moment de stabilisateur (300) étant déterminé dans une étape de détermination en utilisant le signal de capteur de véhicule (128, 130) et/ou le signal de capteur de moteur et/ou la valeur de courant et/ou la valeur mesurée.

**6.** Procédé (500) selon l'une des revendications précédentes, avec lequel, à l'étape d'évaluation (510), une direction d'action associée au moment de stabilisateur (300) et/ou une modification de direction d'action associée au moment de stabilisateur (300) est déterminée en vue de reconnaître le changement de mouvement de rotation.

**7.** Procédé (500) selon la revendication 6, avec lequel, à l'étape d'évaluation (510), la direction d'action et/ou la modification de direction d'action est déterminée en au moins deux endroits différents du stabilisateur de roulis (104) électromécanique.

**8.** Procédé (500) selon la revendication 6 ou 7, avec lequel la direction d'action et/ou la modification de direction d'action est déterminée au niveau d'au moins un étage d'engrenage (14, 15, 16) de l'engrenage (8) et/ou au niveau du moteur électrique (7).

**9.** Contrôleur (120) comprenant des unités (410, 420, 430) qui sont configurées pour mettre en œuvre et/ou commander le procédé (500) selon l'une des revendications 1 à 8.

**10.** Système stabilisateur de roulis (102) ayant les caractéristiques suivantes :

un stabilisateur de roulis (104) électromécanique comprenant une première partie de stabilisateur (106), une deuxième partie de stabilisateur (108), un moteur électrique (7) et un engrenage (8), la première partie de stabilisateur (106) et la deuxième partie de stabilisateur (108) pouvant effectuer une rotation l'une par rapport à l'autre au moyen du moteur électrique (7) et de l'engrenage (8) ; et
un contrôleur (120) selon la revendication 9.

**11.** Programme informatique, qui est configuré pour mettre en œuvre et/ou commander le procédé (500) selon l'une des revendications 1 à 8.

**12.** Support d'enregistrement lisible par machine, sur lequel est enregistré le programme informatique selon la revendication 11.

Fig. 1

EP 3 630 508 B1

Fig. 2

13

Fig. 3

120

410

128          128          412

420

128          128

130          130          122

430

# Fig. 4

500

510

520

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 602005002279 T2
- DE 102015206064 A1
- DE 102010046958 A1
- DE 102014223019 A1